# EUROPÄISCHE PATENTANMELDUNG

(11) **EP 2 028 834 A1**
(43) Veröffentlichungstag der Anmeldung: **25.02.2009**
(21) Anmeldenummer: 07016240.9
(22) Anmeldetag: 19.08.2007
(51) Int. Cl.: H04M 7/00, H04M 3/42, H04L 12/18

(54) **Aufbau von Kommunikationsverbindungen im GSM zwischen Teilnehmern eines Chatraums wie "Second Life"**

(71) Anmelder: Vodafone Holding GmbH, 40213 Düsseldorf (DE)
(72) Erfinder: Ehlen, Ingo, 40545 Düsseldorf (DE); Rodrigues, Bruno, 40219 Düsseldorf (DE); Hartl, Mike, 45478 Mülhem (DE)
(74) Vertreter: Weisbrodt, Bernd

(57) **Zusammenfassung**

Die vorliegende Erfindung betrifft ein Verfahren zum Aufbau einer
Kommunikationsverbindung zum Austausch von Sprache und/oder Daten
zwischen Teilnehmern von Chaträumen insbesondere in einer Internet-3D-Infrastruktur wie beispielsweise "Second Life". Nachteilig beim Stand der Technik ist, dass eine Kommunikation zwischen den Teilnehmern unter Nutzung einer virtuellen Identität nur über die, den Chatraum bereitstellende, Kommunikationsplatform erfolgen kann. Eine kommunikationverbindung von der realen Identität und die virtuelle Identität und von der virtuellen Identität an die reale Identität ist bisher nicht möglich.
Dieser Nachteil wird dadurch überwunden, dass die reale Identität in einer Vermittlungseinrichtung eines Telekommunikationsnetzes mit einer virtuellen Identität seitens einer, einen Chatraum bereitstellenden, Kommunikationsplatform verknüpft wird, so dass unter Nutzung der virtuellen Identität eine Kommunikationsverbindung im Telekommunikationsnetz aufgebaut werden kann.

## Beschreibung

Die vorliegende Erfindung betrifft ein Verfahren zum Aufbau einer Kommunikationsverbindung zum Austausch von Sprache und/oder Daten zwischen Teilnehmern, wobei wenigstens einer der Teilnehmer wenigstens eine reale Identität in einem Telekommunikationsnetz und wenigstens eine erste virtuelle Identität seitens einer Kommunikationsplattform aufweist.

Ferner betrifft die vorliegende Erfindung einen Netzknoten in einem Kommunikationsnetz, welcher an dem Aufbau einer Kommunikationsverbindung zum Austausch von Sprache und/oder Daten zwischen Teilnehmern zumindest teilweise beteiligt ist, sowie ein Endgerät zur Nutzung in Kommunikationsnetzen zum Austausch von Sprache und/oder Daten zwischen Teilnehmern im Rahmen einer Kommunikationsverbindung, welche ausgebildet und/oder eingerichtet sind, ein erfindungsgemäßes Verfahren zumindest teilweise auszuführen.

Im Stand der Technik sind Rechnernetze bekannt, in denen Kommunikationsplattformen bereitgestellt werden, welche es seitens der Kommunikationsplattform registrierten Teilnehmern ermöglichen über die Kommunikationsplattform miteinander zu kommunizieren. Bei der Registrierung seitens der Kommunikationsplattform erhalten die Teilnehmer eine in der Regel frei wählbare virtuelle Identität, welche für die Nutzung der Kommunikationsplattform und insbesondere zu Zwecken einer Kommunikation über die Kommunikationsplattform mit anderen seitens der Kommunikationsplattform registrierten Teilnehmern nutzbar ist. Die virtuelle Identität stellt dabei die Anonymität der realen Identität der Teilnehmer sicher. Derartige Kommunikationsplattformen in einem Rechnernetz sind im Internet mit sogenannten Chaträumen gegeben, insbesondere im Zusammenhang mit Chaträumen in einer Internet-3D-Infrastruktur wie beispielsweise "Second Life" der Linden Lab oder dergleichen Computer-Rollenspiel-Anwendung.

Nachteilig ist, dass eine Kommunikation zwischen den Teilnehmern unter Nutzung der virtuellen Identitäten nur über die Kommunikationsplattform erfolgen kann und die Teilnehmer insbesondere dazu mit ihrer virtuellen Identität seitens der Kommunikationsplattform aktiv, das heißt "Online", sein müssen.

Wenn die Teilnehmer außerhalb der Kommunikationsplattform miteinander Kommunizieren wollen, beispielsweise über ein Telekommunikationsnetz, so müssen die Teilnehmer ihre durch die virtuelle Identität gegebene Anonymität durch Preisgabe ihrer realen Identität in dem Telekommunikationsnetz aufgeben.

Eine Kommunikationsverbindung zwischen den Teilnehmern zumindest teilweise über die Kommunikationsplattform hinaus beziehungsweise hinweg, das heißt insbesondere von der realen Identität in dem Telekommunikationsnetz an die virtuelle Identität seitens der Kommunikationsplattform beziehungsweise von der virtuellen Identität seitens der Kommunikationsplattform an die reale Identität in dem Telekommunikationsnetz, ist bisher nicht möglich.

Der vorliegenden Erfindung liegt in Anbetracht dieses Standes der Technik die Aufgabe zugrunde, Kommunikationsverbindungen zum Austausch von Sprache und/oder Daten zwischen Teilnehmern der eingangs genannten Art zu verbessern, wobei insbesondere Kommunikationsverbindungen zwischen den Teilnehmern zumindest teilweise über die Kommunikationsplattform hinaus beziehungsweise hinweg bei gleichzeitiger Aufrechterhaltung der Anonymität der realen Identität der Teilnehmer ermöglicht werden sollen.

Zur technischen Lösung wird mit der vorliegenden Erfindung ein Verfahren zum Aufbau einer Kommunikationsverbindung zum Austausch von Sprache und/oder Daten zwischen Teilnehmern, wobei wenigstens einer der Teilnehmer wenigstens eine reale Identität in einem Telekommunikationsnetz und wenigstens eine erste virtuelle Identität seitens einer Kommunikationsplattform aufweist, vorgeschlagen, welches dadurch gekennzeichnet ist, dass die reale Identität und die erste virtuelle Identität des wenigstens einen Teilnehmers seitens einer Vermittlungseinrichtung verknüpft werden, class unter Nutzung der Verknüpfung mindestens eine zweite virtuelle Identität bereitgestellt wird, dass unter Nutzung der ersten virtuellen Identität und/oder der zweiten virtuellen Identität des wenigstens einen Teilnehmers eine Kommunikationsverbindung seitens wenigstens eines anderen Teilnehmers aufgebaut werden kann, wobei die Kommunikationsverbindung zumindest teilweise außerhalb der Kommunikationsplattform aufgebaut wird.

Der Erfindung liegt die Erkenntnis zugrunde, dass durch die erfindungsgemäß vorgesehene Verknüpfung der realen Identität und der ersten virtuellen Identität der Teilnehmer und der Bereitstellung mindestens einer zweiten virtuellen Identität vorteilhafterweise Kommunikationsverbindungen zwischen den Teilnehmern über die Kommunikationsplattform hinaus beziehungsweise hinweg bei gleichzeitiger Aufrechterhaltung der Anonymität der realen Identität der Teilnehmer realisierbar sind. Vorteilhafterweise bleibt den Teilnehmern bei der Kommunikationsverbindung die reale Identität des jeweils wenigstens einen anderen Teilnehmers unbekannt. Eine vorteilhafte Ausgestaltung der Erfindung sieht vor, dass die Kommunikationsverbindung zumindest teilweise über das Telekommunikationsnetz aufgebaut wird. Dabei ist ein Teilnehmer erfindungsgemäß für eine Kommunikationsverbindung von wenigstens einem die erste virtuelle Identität des Teilnehmers und/oder mindestens eine zweite virtuelle Identität nutzenden anderen Teilnehmer unter seiner realen Identität erreichbar und/oder kann ein Teilnehmer mit seiner realen Identität eine Kommunikationsverbindung mit wenigstens einem anderen Teilnehmer unter Nutzung der ersten virtuellen Identität des anderen Teilnehmers und/oder mindestens einer zweiten virtuellen Identität vornehmen. Die zweite virtuelle Identität ist in einer besonders bevorzugten Ausgestaltung der Erfindung einer zur Adressierung einer Kommunikationsverbindung mit dem Teilnehmer nutzbare Information, nachfolgend als sogenannte Adressierungsinformation bezeichnet.

Vorteilhafterweise ist eine Kommunikationsverbindung auch dann realisierbar, wenn Teilnehmer nicht mit ihrer virtuellen Identität seitens der Kommunikationsplattform aktiv sind, das heißt also "Offline" sind.

Eine weitere vorteilhafte Ausgestaltung der Erfindung sieht vor, dass die zweite virtuelle Identität zumindest zwischen jeweils einem Paar von Teilnehmern nicht-temporär ist.

In einer weiteren Ausgestaltung der Erfindung ist die zweite virtuelle Identität zwischen allen Teilnehmern nicht-temporär.

Eine weitere vorteilhafte Ausgestaltung eines erfindungsgemäßen Verfahrens zum Aufbau einer Kommunikationsverbindung zum Austausch von Sprache und/oder Daten zwischen Teilnehmern in Kommunikationsnetzen, wobei wenigstens einer der Teilnehmer wenigstens eine reale Identität in einem Telekommunikationsnetz und wenigstens eine erste virtuelle Identität seitens einer Kommunikationsplattform in einem Rechnernetz aufweist, ist dadurch gekennzeichnet, das die reale Identität und die erste virtuelle Identität wenigstens eines Teilnehmers seitens einer Vermittlungseinrichtung verknüpft werden, unter Nutzung der Verknüpfung mindestens eine zweite virtuelle Identität bereitgestellt wird, welche als Information zur Adressierung einer Kommunikationsverbindung mit dem Teilnehmer (Adressierungsinformation) nutzbar ist, wobei eine Kommunikationsverbindung zwischen einem die Kommunikationsverbindung initiierenden Teilnehmer und wenigstens einem die Kommunikationsverbindung rezipierenden Teilnehmer zumindest unter Nutzung der ersten virtuellen Identität des rezipierenden Teilnehmers und/oder der zweiten virtuellen Identität (Adressierungsinformation) ermöglicht wird, wobei der initiierende Teilnehmer und/oder der rezipierende Teilnehmer für die Initiierung und/oder die Rezipierung der Kommunikationsverbindung seine reale Identität in dem Telekommunikationsnetz nutzt.

Erfindungsgemäß kann ein Teilnehmer unter Nutzung seiner realen Identität von dem Telekommunikationsnetz aus in die Kommunikationsplattform hinein mit wenigstens einem anderen Teilnehmer (rezipierender Teilnehmer) kommunizieren, wobei dem wenigstens einen anderen Teilnehmer dabei vorteilhafterweise lediglich die erste virtuelle Identität des die Kommunikationsverbindung anfordernden beziehungsweise initiierenden Teilnehmers und/oder wenigstens eine zweite virtuelle Identität beziehungsweise eine Adressierungsinformation signalisiert wird, so dass die Anonymität der realen Identität des die Kommunikationsverbindung anfordernden beziehungsweise initiierenden Teilnehmers gewahrt bleibt. Der wenigstens eine rezipierende Teilnehmer kann dabei entweder seitens der Kommunikationsplattform und/oder seitens des Telekommunikationsnetzes erreichbar sein. Ferner kann ein Teilnehmer (initiierender Teilnehmer) mit seiner ersten virtuellen Identität und/oder wenigstens einer zweiten virtuellen Identität (Adressierungsinformation) die Kommunikationsverbindung mit dem wenigstens einen anderen Teilnehmer (rezipierenden Teilnehmer) vornehmen, wobei vorteilhafterweise die Vermittlungseinrichtung den Aufbau der Kommunikationsverbindung zwischen der realen Identität des initiierenden Teilnehmers und dem wenigstens einen rezipierenden Teilnehmer initiiert. Der initiierende Teilnehmer kann so unter Nutzung seiner ersten virtuellen Identität und/oder wenigstens einen zweiten virtuellen Identität (Adressierungsinformation) von der Kommunikationsplattform aus mit wenigstens einem rezipierenden Teilnehmer kommunizieren, wobei dem rezipierenden Teilnehmer dabei vorteilhafterweise lediglich die erste virtuelle Identität und/oder wenigstens zweite virtuelle Identität (Adressierungsinformation) des die Kommunikationsverbindung initiierenden Teilnehmers signalisiert wird. Der rezipierende Teilnehmer kann dabei entweder seitens der Kommunikationsplattform und/oder seitens des Telekommunikationsnetzes erreichbar sein. Dem die Kommunikationsverbindung anfordernden beziehungsweise initiierenden Teilnehmer wird dabei vorteilhafterweise lediglich die erste virtuelle Identität und/oder wenigstens eine zweite virtuelle Identität (Adressierungsinformation) des rezipierenden Teilnehmers signalisiert, so dass die Anonymität der realen Identität des rezipierenden Teilnehmers gewahrt bleibt. Im Falle eines Austausches von Daten im Rahmen der Kommunikationsverbindung, wobei der die Kommunikationsverbindung anfordernde beziehungsweise initiierende Teilnehmer Daten an den wenigstens einen rezipierenden Teilnehmer sendet, erhält der die Kommunikationsverbindung initiierende Teilnehmer im Rahmen der von der Vermittlungseinrichtung initiierten Kommunikationsverbindung vorteilhafterweise eine Information über das Versenden beziehungsweise die Weiterleitung der Daten an den wenigstens einen rezipierenden Teilnehmer, vorzugsweise unter Signalisierung der zweiten virtuellen Identität (Adressierungsinformation).

Eine besonders vorteilhafte Ausgestaltung der Erfindung ist dadurch gekennzeichnet, dass wenigstens eine zweite virtuelle Identität (Adressierungsinformation) durch eine Verknüpfung der ersten virtuellen Identitäten von wenigstens zwei Teilnehmern, durch eine Verknüpfung der zweiten virtuellen Identitäten (Adressierungsinformationen) von wenigstens zwei Teilnehmern und/oder durch eine Verknüpfung einer ersten virtuellen Identität wenigstens eines Teilnehmers mit einer zweiten virtuellen Identität (Adressierungsinformation) wenigstens eines anderen Teilnehmers seitens der Vermittlungseinrichtung bereitgestellt wird. Vorteilhafterweise hat die wenigstens eine durch die Verknüpfung bereitgestellte zweite virtuelle Identität (Adressierungsinformation) eine zumindest paarweise Gültigkeit unter den Teilnehmern.

Eine weitere vortei hafte Ausgestaltung der Erfindung ist dadurch gekennzeichnet, dass die Verknüpfung eine nicht temporäre Verknüpfung ist. Eine entsprechende Verknüpfung wird vorteilhafterweise von beziehungsweise seitens der Vermittlungseinrichtung verwaltet und ermöglicht grundsätzlich eine dauerhafte Nutzbarkeit der Verknüpfung für erfindungsgemäße Kommunikationsverbindungen zwischen den jeweiligen Teilnehmern.

Eine besonders bevorzugte Ausgestaltung der Erfindung sieht vor, dass die Verknüpfung derart erfolgt, dass die Anzahl der von der Vermittlungseinrichtung zu verwaltenden zweiten virtuellen Identitäten beziehungsweise Adressierungsinformationen reduziert ist. Besonders vorteilhaft ist dabei, dass durch die erfindungsgemäß zumindest paarweise gegebene Gültigkeit einer zweiten virtuellen Identität beziehungsweise Adressierungsinformation zwischen den Teilnehmern eine mehrfache Nutzbarkeit von zweiten virtuellen Identitäten beziehungsweise Adressierungsinformationen für verschiedene Teilnehmer bei gleichzeitiger Gewährleistung der Eindeutigkeit der jeweiligen Adressierung einer Kommunikationsverbindung zwischen Teilnehmern realisierbar ist. Erfindungsgemäß werden dabei vorteilhafterweise zweite virtuelle Identitäten beziehungsweise Adressierungsinformationen für eine Paarung (Matching) von Teilnehmern genutzt. Die Erfindung macht sich dabei vorteilhafterweise die Erkenntnis zu nutze, dass Paarungen über die jeweils gepaarten Teilnehmer als auch über die Richtung der Paarung zwischen den Teilnehmern, wonach eine von Teilnehmer A ausgehende Verbindung der Teilnehmer A und B sich von einer von Teilnehmer B ausgehende Verbindung der Teilnehmer A und B unterscheidet, erfolgen können und somit für eine eindeutige Adressierung zur Verfügung stehende zweite virtuelle Identitäten beziehungsweise Adressierungsinformationen mehrfach für verschiedene Teilnehmer genutzt werden können. Besonders vorteilhaft ist eine entsprechende Anwendung mit hinsichtlich der Anzahl reduzierter zweiter virtueller Identitäten beziehungsweise Adressierungsinformationen, wenn nur eine begrenzte und/oder eine beschränkte Anzahl von möglichen zweiten virtuellen Identitäten beziehungsweise Adressierungsinformationen zur Verfügung steht beziehungsweise zur Verfügung gestellt wird.

Eine weitere vorteilhafte Ausgestaltung der Erfindung sieht vor, dass die Vermittlungseinrichtung den Aufbau der Kommunikationsverbindung zwischen der realen Identität wenigstens eines der Teilnehmer in dem Telekommunikationsnetz und dem wenigstens einen anderen Teilnehmer initiiert. Dabei können vorteilhafterweise entweder beide Teilnehmer oder wenigstens einer der Teilnehmer seitens der Kommunikationsplattform und/oder seitens des Telekommunikationsnetzes erreichbar sein.

Vorteilhafterweise wird bei der Kommunikationsverbindung den Teilnehmern jeweils die erste virtuelle Identität des wenigstens einen anderen Teilnehmers und/oder die jeweilige zweite virtuelle Identität (Adressierungsinformation) des wenigstens einen anderen Teilnehmers signalisiert.

Eine weitere Ausgestaltung der Erfindung sieht vorteilhafterweise vor, dass den für die Kommunikationsverbindung ihre reale Identität nutzenden Teilnehmern die Nutzung ihrer jeweiligen eigenen ersten virtuellen Identität und/oder die Nutzung ihrer jeweiligen zweiten virtuellen Identität (Adressierungsinformation) für und/oder mit dem wenigstens einen anderen Teilnehmer signalisiert wird. Vorteilhafterweise können Teilnehmer so seitens ihrer realen Identität erkennen, dass eine Kommunikationsverbindung für ihre eigene erste virtuelle Identität seitens der realen Identität eingeht und entsprechend reagieren. Ferner können Teilnehmer so vorteilhafterweise die dem jeweiligen anderen Teilnehmer für die Kommunikationsverbindung zur Nutzung bereitgestellte zweite virtuelle Identität beziehungsweise Adressierungsinformation für die Kommunikationsverbindung mit dem Teilnehmer selbst erfahren und insbesondere bei Bedarf und/oder Wunsch erfassen, beispielsweise durch Speicherung seitens einer dazu vorgesehenen Speichereinrichtung.

Eine weitere vorteilhafte Ausgestaltung der Erfindung sieht vor, dass die reale Identität eines Teilnehmers wenigstens eine dem Teilnehmer seitens des Telekommunikationsnetzes zugeordnete Rufnummer (reale MSISDN) des Telekommunikationsnetzes umfasst, welche für die Kommunikationsverbindung als reale Identität des Teilnehmers genutzt wird. Die Rufnummer seitens des Telekommunikationsnetzes ist vorzugsweise eine reale MSISDN, das heißt eine einer realen Person zugeordnete MSISDN seitens eines Mobilfunknetzes gemäß einem GSM-, GPRS- und/oder UMTS-Funknetzstandard.

Vorteilhafterweise umfasst die erste virtuelle Identität eines Teilnehmers wenigstens eine Adressierungsinformation, welche für die Kommunikationsverbindung als erste virtuelle Identität des Teilnehmers genutzt wird. Die Adressierungsinformation der ersten virtuellen Identität unterscheidet sich dabei von der Adressierungsinformation der zweiten virtuellen Identität. Die Adressierungsinformation der ersten virtuellen Identität kann vorteilhafterweise ein virtueller Name eines Teilnehmers seitens der Kommunikationsplattform sein.

In einer besonders bevorzugten Ausgestaltung der Erfindung ist die zweite Identität oder die Adressierungsinformation eine von dem Telekommunikationsnetz verwaltete, aber insbesondere keiner realen Person zugeordnete Rufnummer (virtuelle MSISDN) des Telekommunikationsnetzes. Vorteilhafterweise wird die von dem Telekommunikationsnetz verwaltete Rufnummer (virtuelle MSISDN) des Telekommunikationsnetzes seitens der Vermittlungseinrichtung mit der dem Teilnehmer seitens des Tetekommunikationsnetzes zugeordneten Rufnummer (reale MSISDN) des Tetekommunikationsnetzes verknüpft.

Vorteilhafterweise kann ein Teilnehmer die für ihn für eine Kommunikationsverbindung mit wenigstens einem anderen Teilnehmer eingerichtete Verknüpfung aktivieren oder deaktivieren. Eine vorteilhafte Ausgestaltung ist dabei durch eine temporäre oder dauerhafte Aktivierung und/oder eine temporäre oder dauerhafte Deaktivierung gekennzeichnet. Erfindungsgemäß wird dem Teilnehmer so die Möglichkeit eingeräumt, andere Teilnehmer von einer Kommunikationsmöglichkeit mit dem Teilnehmer auszuschließen, sogenannte Sperrfunktion, insbesondere um Belästigungen des Teilnehmers durch andere Teilnehmer unterbinden zu können.

Die Verknüpfung in der Vermittlungseinrichtung ist gemäß einer weiteren vorteilhaften Ausgestaltung der Erfindung von dem jeweiligen Teilnehmer unter Nutzung seiner ersten virtuellen Identität über eine seitens der Kommunikationsplattform von der Vermittlungseinrichtung angebotene Schnittstelle editierbar. Die Schnittstelle weist vorteilhafterweise eine graphische Benutzeroberfläche (GUI) auf, so dass ein vereinfachtes und vorteilhafterweise intuitives Editieren ermöglicht wird. Die Schnittstelle ist vorteilhafterweise ferner zum Editieren der virtuellen Identität ausgebildet und/oder nutzbar.

Die Kommunikationsverbindung ermöglicht vorteilhafterweise einen Datenaustausch zwischen den Teilnehmern über einen Nachrichtendienst des Telekommunikationsnetzes. Eine bevorzugte Ausgestaltung der Erfindung ist gekennzeichnet durch einen Kurzmitteilungsdienst (SMS) oder einen Multimediamitteilungsdienst (MMS) als Nachrichtendienst des Telekommunikationsnetzes.

Eine weitere Ausgestaltung der Erfindung sieht vor, dass das Telekommunikationsnetz ein Mobilfunknetz ist, vorzugsweise ein Mobilfunknetz gemäß einem GSM-, GPRS- und/oder UMTS-Funknetzstandard.

Gemäß einer besonders bevorzugten weiteren Ausgestaltung der Erfindung ist die Kommunikationsplattform in einem Rechnernetz ein Chatraum im Internet, vorzugsweise ein Chatraum in einer Internet-3D-Infrastruktur wie "Second Life" der Linden Lab oder dergleichen Computer-Rollenspiel-Anwendung in einem Rechnernetz.

Die Vergebührung der Kommunikationsverbindung erfolgt vorteilhafterweise über die reale MSISDN des jeweiligen Teilnehmers, und wird vorzugsweise von dem die Kommunikationsverbindung initiierenden Teilnehmer getragen.

Gegenstand der vorliegenden Erfindung ist ferner ein Netzknoten in einem Kommunikationsnetz, welcher an dem Aufbau einer Kommunikationsverbindung zum Austausch von Sprache und/oder Daten zwischen Teilnehmern zumindest teilweise beteiligt ist und ausgebildet und/oder eingerichtet ist ein erfindungsgemäßes Verfahren zumindest teilweise auszuführen.

Vorteilhafterweise bildet der Netzknoten die Vermittlungseinrichtung und/oder ist der Netzknoten zumindest mit der Vermittlungseinrichtung verbindbar.

In einer weiteren vorteilhaften Ausgestaltung der Erfindung ist der Netzknoten eine Umsetzeinrichtung (Gateway) zwischen dem Telekommunikationsnetz und dem Rechnernetz, vorzugsweise eine Umsetzeinrichtung (Gateway) zwischen einem Mobilfunknetz und dem Internet oder einem Intranet.

Gegenstand der vorliegenden Erfindung ist darüber hinaus ein Endgerät zur Nutzung in Kommunikationsnetzen zum Austausch von Sprache und/oder Daten zwischen Teilnehmern im Rahmen einer Kommunikationsverbindung, welches ausgebildet und/oder eingerichtet ist ein erfindungsgemäßes Verfahren zumindest teilweise auszuführen.

In einer weiteren vorteilhaften Ausgestaltung der Erfindung ist das Endgerät ausgebildet und/oder eingerichtet bei der Kommunikationsverbindung den Teilnehmern jeweils die erste virtuelle Identität des wenigstens einen anderen Teilnehmers und/oder die jeweilige zweite virtuelle Identität beziehungsweise Adressierungsinformation des wenigstens einen anderen Teilnehmers zu signalisieren. Vorte Ihafterweise ist das erfindungsgemäße Endgerät ausgebildet und/oder eingerichtet bei der Kommunikationsverbindung den für die Kommunikationsverbindung ihre reale Identität nutzenden Teilnehmern die Nutzung ihrer jeweiligen eigenen ersten virtuellen Identität und/oder die Nutzung ihrer jeweiligen zweiten virtuellen Identität beziehungsweise Adressierungsinformation für und/oder mit dem wenigstens einen anderen Teilnehmer zu signalisieren. Die Signalisierung erfolgt vorteilhafterweise durch ein entsprechendes akustisches und/oder optisches Signal, welches geeignet ist die virtuelle Identität von realen Identitäten zu unterscheiden.

In einer bevorzugten Ausgestaltung der Erfindung ist das Endgerät ein in einem Mobilfunknetz gemäß einem GSM-, GPRS- und/oder UMTS-Funknetzstandard betreibbares Mobilfunktelefon.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer schematischen Prinzipdarstellung ein Ausführungsbeispiel einer Einrichtung beziehungsweise Registrierung einer Verknüpfung zwischen einer realen Identität und einer ersten virtuellen Identität von Teilnehmern einer erfindungsgemäßen Kommunikation;
- Fig. 2: in einer schematischen Prinzipdarstellung ein Ausführungsbeispiel einer erfindungsgemäßen Kommunikation;

- Fig. 3: in einer schematischen Prinzipdarstellung ein weiteres Ausführungsbeispiel einer erfindungsgemäßen Kommunikation;
- Fig. 4: in einer schematischen Prinzipdarstellung ein weiteres Ausführungsbeispiel einer erfindungsgemäßen Kommunikation;
- Fig. 5: in einer schematischen Prinzipdarstellung ein weiteres Ausführungsbeispiel einer erfindungsgemäßen Kommunikation und
- Fig. 6: in einer schematischen Prinzipdarstellung ein weiteres Ausführungsbeispiel einer erfindungsgemäßen Kommunikation.

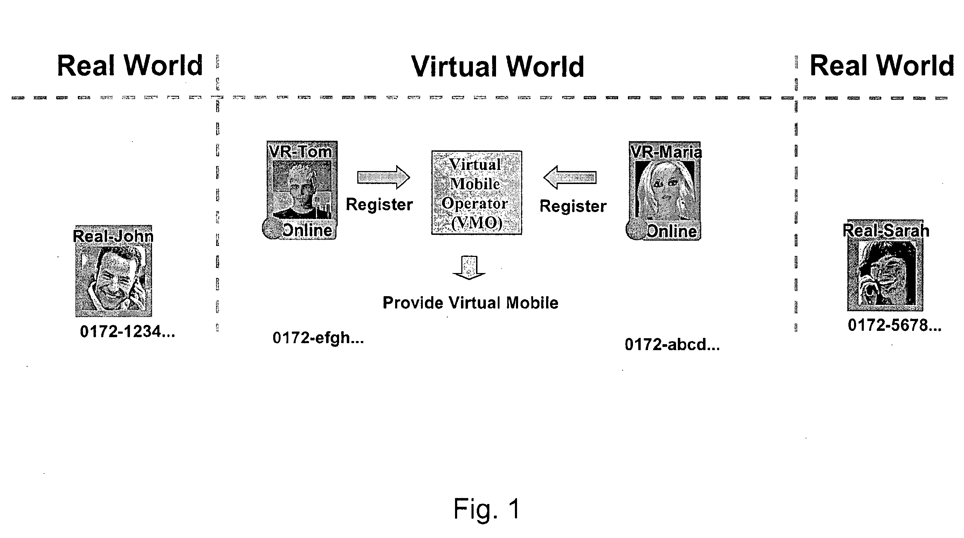

Fig. 1 bis Fig. 6 zeigen jeweils zwei Teilnehmer einer erfindungsgemäßen Kommunikation. Die Teilnehmer weisen dabei jeweils eine reale Identität in einem Telekommunikationsnetz (Real World) und eine erste virtuelle Identität seitens einer Kommunikatonsplattform in einem Rechnernetz (Virtual World) auf. Die Telekommunikationsnetze (Real World) der beiden Teilnehmer können unterschiedliche Tetekommunikationsnetze (Real World) sein und/oder von unterschiedlichen Telekommunikationsnetzbetreibern unterhalten werden. Vorliegend sind die Telekommunikationsnetze (Real World) der beiden Teilnehmer Mobilfunknetze (Real World) gemäß einem GSM-, GPRS- und/oder UMTS-Funknetzstandard. Die Kommunikationsplattform in einem Rechnernetz ist vorliegend ein Chatraum (Virtual World) im Internet, vorzugsweise ein Chatraum in einer Internet-3D-Infrastruktur wie "Second Life" der Linden Lab oder dergleichen Computer-Rollenspiel-Anwendung.

Die reale Identität des einen Teilnehmers umfasst vorliegend den realen Namen "John" und eine reale MSISDN, vorliegend "0172-1234...", die dem Teilnehmer "John" seitens seines Mobilfunknetzes (Real World) zugeordnet ist. Die erste virtuelle Identität des Teilnehmers mit dem realen Namen "John" umfasst vorliegend den virtuellen Namen "Tom". Die reale Identität des anderen Teilnehmers umfasst vorliegend den realen Namen "Sarah" und eine reale MSISDN, vorliegend "0172-5678...", die dem Teilnehmer "Sarah" seitens seines Mobilfunknetzes (Real World) zugeordnet ist. Die erste virtuelle Identität des Teilnehmers mit dem realen Namen "Sarah" umfasst vorliegend den virtuellen Namen "Maria".

Fig. 1 zeigt, wie sich die realen Teilnehmer "John" beziehungsweise "Sarah" in dem Chartraum (Virtual World) mit ihrer ersten virtuellen Identität "Tom" beziehungsweise "Maria" seitens einer in dem Chatraum (Virtual World) eingerichteten Verrnittlungseinrichtung (VMO: Virtual Mobile Operator) registrieren um jeweils mindestens eine zweite virtuelle Identität zu erhalten. Die zweite virtuelle Identität ist dabei eine Information zur Adressierung eines Teilnehmers einer Kommunikationsverbindung, eine sogenannte Adressierungsinformation. Die zweite virtuelle Identität beziehungsweise Adressierungsinformation ist vorliegend eine virtuelle Rufnummer, das heißt eine in einem Telekommunikationsnetz verwaltete Rufnummer, welche keiner realen Identität zugeordnet ist. Hierzu erhält der Teilnehmer von oder über die Vermittlungseinrichtung (VMO: Virtual Mobile Operator) vorteilhafterweise ein virtuelles Endgerät (virtual Mobile), welches seitens der Kommunikationsplattform, vorliegend als "Second Life", nutzbar ist, sich also seitens der Kommunikationsplattform als graphisches Mobiltelefon darstellt und nutzbar ist.

Im Rahmen der Registrierung wird seitens der Vermittlungseinrichtung (VMO) zu der ersten virtuellen Identität der Teilnehmer, also zu "Tom" beziehungsweise "Maria", deren jeweilige reale Identität, vorliegend die reale MISDN, also die reale MSISDN "0172-1234..." von "John" beziehungsweise die reale MSISDN "0172-5678..." von "Sarah", durch Verknüpfung miteinander erfasst. Unter Nutzung der Verknüpfung wird mit sofortiger Wirkung oder zu einem späteren Zeitpunkt mindestens eine zweite virtuelle Identität (virtuelle MSISDN) bereitgestellt und der Verknüpfung zugeordnet. Die so gegebene Verknüpfung wird vorteilhafterweise seitens der Vermittlungseinrichtung (VMO) oder einer von dieser nutzbaren Einrichtung gespeichert.

Den Teilnehmern "Tom" beziehungsweise "Maria" kann bei Bedarf und/oder Wunsch ihre bereitgestellte eigene virtuelle MSISDN von der Vermittlungseinrichtung (VMO) insbesondere in dem Fall mitgeteilt werden, bei dem die bereitgestellte virtuelle MSISDN für alle anderen den Teilnehmer erreichenden Teilnehmer identisch ist. Alternativ ist es jedoch ebenfalls vorgesehen, die eigene virtuelle MSISDN den Teilnehmern nicht mitzuteilen, insbesondere dann, wenn die eigene virtuelle MSISDN nicht für alle anderen den Teilnehmer erreichenden Teilnehmer identisch ist.

Die Vermittlungseinrichtung (VMO) weist vorliegend eine seitens der Kommunikationsplattform von der Vermittlungseinrichtung (VMO) angebotene Schnittstelle mit graphischer Benutzeroberfläche (GUI) auf, welche eine Registrierung und/oder ein Editieren der im Rahmen der Registrierung erfolgenden Verknüpfung zwischen der ersten virtuellen Identität und der realen MSISDN von dem jeweiligen Teilnehmer unter seiner jeweiligen ersten virtuellen Identität über die Kommunikationsplattform ermöglicht.

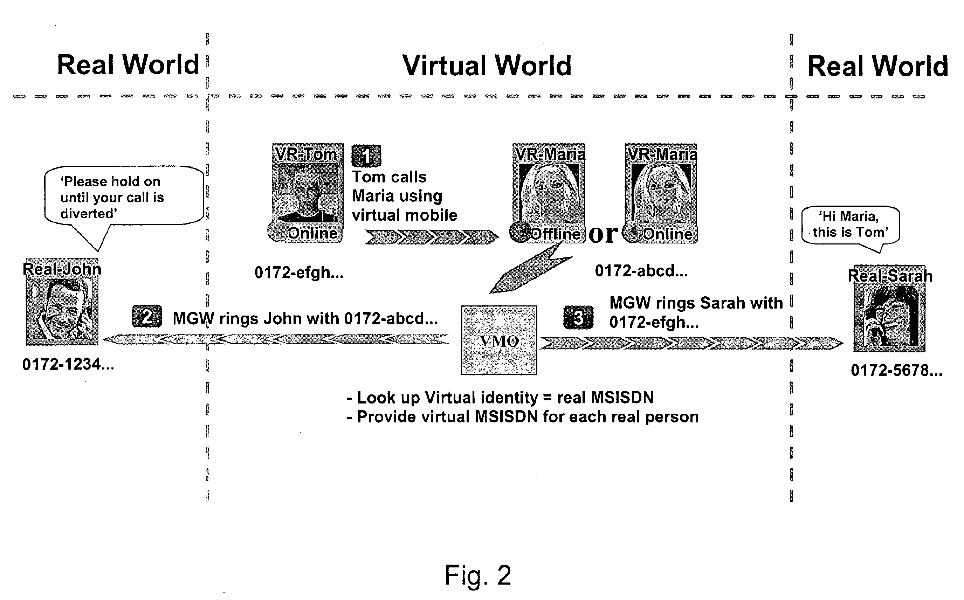

Bei dem in Fig. 2 dargestellten Ausführungsbeispiel einer erfindungsgemäßen Kommunikation ist der reale Teilnehmer "John" mit seiner ersten virtuellen Identität "Tom" seitens des Chatraums (Virtual World) online und initiiert den Aufbau einer Kommunikationsverbindung zum Austausch von Sprache mit der virtuellen Identität "Maria" - also vorliegend der ersten virtuellen Identität - des realen Teilnehmers "Sarah". Die Initiierung der Kommunikationsverbindung ist in Fig. 2 mit 1 ("Tom calls Maria using virtual mobile") gekennzeichnet. Für die Adressierung der Kommunikationsverbindung mit dem virtuellen Teilnehmer "Maria" nutzt der virtuelle Teilnehmer "Tom" vorliegend die erste virtuelle Identität des Teilnehmers "maria". Alternativ und/oder ergänzend kann der virtuelle Teilnehmer "Tom" für die Adressierung der Kommunikationsverbindung vorteilhafterweise eine ihm bekannte zweite virtuelle Identität (virtuelle MSISDN) von dem virtuelle Teilnehmer "maria", welche ihm vorher von diesem beziehungsweise der Vermittlungseinrichtung (VMO) mitgeteilt oder sonst wie bekannt geworden ist, nutzen. Für die Initiierung des Aufbaus der Kommunikationsverbindung kann der reale Teilnehmer "John" vorteilhafterweise seine zweite virtuelle Identität beziehungsweise Adressierungsinformation (virtuelle MSISDN) nutzen, vorzugsweise mit einem virtuellen Endgerät (virtual Mobile).

Die Vermittlungseinrichtung (VMO) bestimmt anhand der von dem virtuellen Teilnehmer "Tom" für die Adressierung der Kommunikationsverbindung mit dem virtuellen Teilnehmer "Maria" genutzten ersten virtuellen Identität und/oder zweiten virtuellen Identität beziehungsweise Adressierungsinformation (virtuelle MSISDN) der virtuellen Identität ("Maria") des virtuellen Teilnehmers "Maria" aus der im Rahmen der Registrierung (vergleiche Fig. 1) seitens der Vermittlungseinrichtung (VMO) erfassten Verknüpfung die reale MSISDN ("0172-5678...") des Teilnehmers (virtuell "Maria", real "Sarah").

Anschließend initiiert die Vermittlungseinrichtung (VMO) unabhängig davon, ob der reale Teilnehmer "Sarah" mit seiner virtuellen Identität "Maria" seitens des Chatraums (Virtual World) online oder offline ist den Aufbau einer Kommunikationsverbindung zwischen der realen MSISDN "0172-1234..." des realen Teilnehmers "John" und der realen MSISDN "0172-5678..." des realen Teilnehmers "Sarah", in Fig. 2 mit 2 ("MGW rings John with 0172-abcd...") beziehungsweise 3 ("MGW rings Sarah with 0172-efgh...") gekennzeichnet. Dem realen Teilnehmer "John" wird dabei von oder über die Vermittlungseinrichtung (VMO) die bereitgestellte zweite virtuelle Identität beziehungsweise Adressierungsinformation (virtuelle MSISDN, "0172-abcd...") der virtuellen Identität des Teilnehmers (virtuell "Maria", real "Sarah") und mitunter - beispielsweise bei Bedarf - die virtuelle Identität "Maria" signalisiert. Dem realen Teilnehmer "Sarah" wird dabei von oder über die Vermittlungseinrichtung (VMO) die bereitgestellte zweite virtuelle Identität beziehungsweise Adressierungsinformation (virtuelle MSISDN, "0172-efgh") der virtuellen Identität des Teilnehmers (virtuell "Tom", real "John") und mitunter - beispielsweise bei Bedarf - die virtuelle Identität "Tom" signalisiert. Ferner kann dem realen Teilnehmer "John" signalisiert werden, dass die an ihn real gerichtete Kommunikationsverbindung für seine virtuelle Identität "Tom" ist.

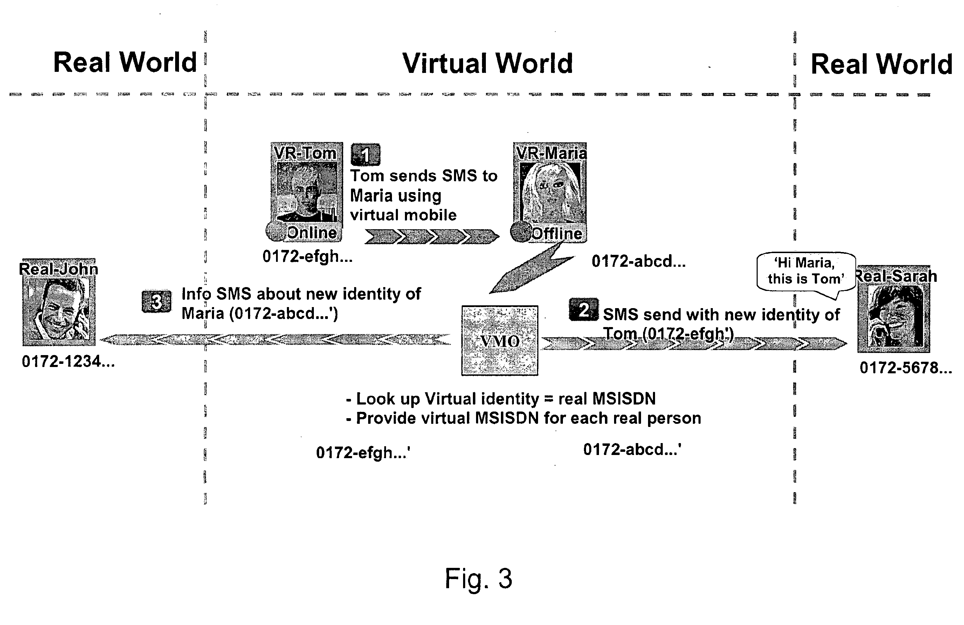

Bei dem in Fig. 3 dargestellten Ausführungsbeispiel einer erfindungsgemäßen Kommunikation ist der reale Teilnehmer "John" mit seiner ersten virtuellen Identität "Tom" seitens des Chatraums (Virtual World) online und initiiert den Aufbau einer Kommunikationsverbindung zum Austausch von Daten, vorliegend einer Nachricht mittels einer SMS, mit der virtuellen Identität "Maria" des realen Teilnehmers "Sarah". Die Initiierung der Kommunikationsverbindung ist in Fig. 3 mit 1 ("Tom sends SMS to Maria using virtual mobile") gekennzeichnet. Für die Adressierung der Kommunikationsverbindung mit dem virtuellen Teilnehmer "Maria" nutzt der virtuelle Teilnehmer "Tom" vorliegend die erste virtuelle Identität des Teilnehmers "Maria". Alternativ und/oder ergänzend kann der virtuelle Teilnehmer "Tom" für die Adressierung der Kommunikationsverbindung vorteilhafterweise eine ihm bekannte zweite virtuelle Identität (virtuelle MSISDN) von dem virtuellen Teilnehmer "Maria", welche ihm vorher von diesem beziehungsweise von der Vermittlungseinrichtung (VMO) mitgeteilt oder sonst wie bekannt geworden ist, nutzen. Für die Initiierung des Aufbaus der Kommunikationsverbindung kann der reale Teilnehmer "John" vorteilhafterweise seine zweite virtuelle Identität beziehungsweise Adressierungsinformation (virtuelle MSISDN) nutzen, vorzugsweise mit einem virtuellen Endgerät (virtual Mobile).

Der reale Teilnehmer "Sarah" ist mit seiner virtuellen Identität "Maria" nicht seitens des Chatraums (Virlual World) erreichbar, das heißt offline.

Die Vermittlungseinrichtung (VMO) bestimmt anhand der von dem virtuellen Teilnehmer "Tom" für die Adressierung der Kommunikationsverbindung mit dem virtuellen Teilnehmer "Maria" genutzten zweiten virtuellen Identität beziehungsweise Adressierungsinformation (virtuelle MSISDN) der virtuellen Identität ("Maria") des virtuellen Teilnehmers "Maria" aus der im Rahmen der Registrierung (vergleiche Fig. 1) seitens der Vermittlungseinrichtung (VMO) erfassten Verknüpfung die reale MSISDN ("0172-5678...") des Teilnehmers (virtuell "Maria", real "Sarah").

Anschließend initiiert die Vermittlungseinrichtung (VMO) das Versenden der SMS des virtuellen Teilnehmers "Tom" (real "John") an die reale MSISDN "0172-5678..." des realen Teilnehmers "Sarah", in Fig. 3 mit 2 ("SMS send with new identity of Tom (0172-efgh...')") gekennzeichnet. Dem realen Teilnehmer "Sarah" wird dabei von oder über die Vermittlungseinrichtung (VMO) die weitere bereitgestellte zweite Identität beziehungsweise Adressierungsinformation (virtuelle MSISDN, "0172-efgh...'") der virtuellen Identität des Teilnehmers (virtuell "Tom", real "John") und mitunter - beispielsweise bei Bedarf - die virtuelle Identität "Tom" signalisiert Ferner initiiert die Vermittlungseinrichtung (VMO) das Versenden einer Info-SMS an die reale MSISDN "0172-1234..." des realen Teilnehmers "John", in Fig. 3 mit 3 ("Info SMS about new identity of Maria (0172-abcd...')") gekennzeichnet. Dem realen Teilnehmer "John" wird dabei von oder über die Vermittlungseinrichtung (VMO) die weitere bereitgestellte zweite virtuelle Identität beziehungsweise Adressierungsinformation (virtuelle MSISDN, "0172-abcd...' ") der virtuellen Identität des Teilnehmers (virtuell "Maria", real "Sarah") und mitunter - beispielsweise bei Bedarf - die virtuelle Identität "Maria" signalisiert.

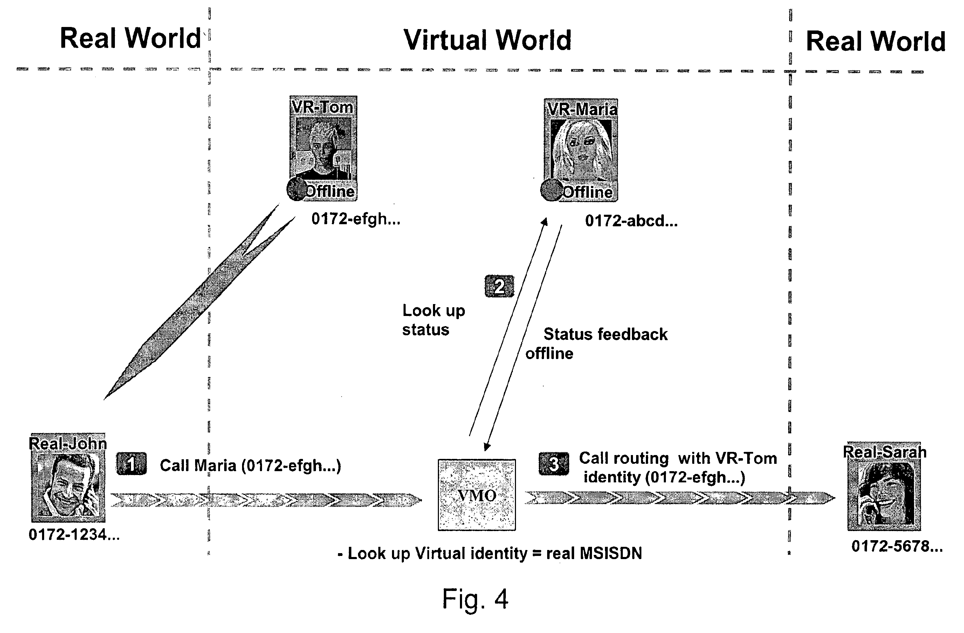

Bei dem in Fig. 4 dargestellten Ausführungsbeispiel einer erfindungsgemäßen Kommunikation ist der reale Teilnehmer "John" mit seiner virtuellen Identität "Tom" nicht seitens des Chatraums (Virtual World) erreichbar (also offline) und initiiert unter Nutzung seiner realen MSISDN "0172-1234..." den Aufbau einer Kommunikationsverbindung zum Austausch von Sprache mit der virtuellen Identität "Maria" des realen Teilnehmers "Sarah". Die Initiierung der Kommunikationsverbindung ist in Fig. 4 mit 1 ("Call Maria (0172-efgh...") gekennzeichnet.

Für die Adressierung der Kommunikationsverbindung mit dem virtuellen Teilnehmer "Maria" nutzt der virtuelle Teilnehmer "Tom" vorliegend die erste virtuelle Identität des Teilnehmers "Maria". Alternativ und/oder ergänzend kann der virtuelle Teilnehmer "Tom" für die Adressierung der Kommunikationsverbindung vorteilhafterweise eine ihm bekannte zweite virtuelle Identität (virtuelle MSISDN) von dem virtuellen Teilnehmer "Maria", welche ihm vorher von diesem mitgeteilt oder sonst wie bekannt geworden ist, nutzen.

Die Vermittlungseinrichtung (VMO) bestimmt vorliegend anhand der von dem virtuellen Teilnehmer "Tom" für die Adressierung der Kommunikationsverbindung mit dem virtuellen Teilnehmer "Maria" genutzten ersten virtuellen Identität ("Maria") des virtuellen Teilnehmers "Maria" aus der im Rahmen der Registrierung (vergleiche Fig. 1) seitens der Vermittlungseinrichtung (VMO) erfassten Verknüpfung die reale MSISDN ("0172-5678...") des Teilnehmers (virtuell "Maria", real "Sarah").

Anschließend ermittelt die Vermittlungseinrichtung (VMO) den Erreichbarkeitsstatus des anderen Teilnehmers (real "Sarah", virtuell "Maria") seitens des Chatraums (Virtual World). Die Ermittlung des Erreichbarkeitsstatus ist in Fig. 4 mit 2 ("Lock up status" und "Status feedback") gekennzeichnet.

Ist, wie in Fig. 4 dargestellt, der reale Teilnehmer "Sarah" mit seiner virtuellen Identität "Maria" nicht seitens des Chatraums (Virtual World) erreichbar, also offline, so initiiert die Vermittlungseinrichtung (VMO) den Aufbau einer Kommunikationsverbindung zwischen der realen MSISDN "0172-1234..." des realen Teilnehmers "John" und der realen MSISDN "0172-5678..." des realen Teilnehmers "Sarah", in Fig. 4 mit 3 ("Call routing with VR-Tom identity (0172-efgh...)") gekennzeichnet. Dem realen Teilnehmer "Sarah" wird dabei von oder über die Vermittlungseinrichtung (VMO) die zweite virtuelle Identität beziehungsweise Adressierungsinformation (virtuelle MSISDN, "0172-efgh...") der virtuellen Identität des Teilnehmers (virtuell "Tom", real "John"), die diesem im Rahmen der Registrierung nach Fig. 1 bereitgestellt und zugeordnet wurde, und mitunter - beispielsweise bei Bedarf - die virtuelle Identität "Tom" signalisiert.

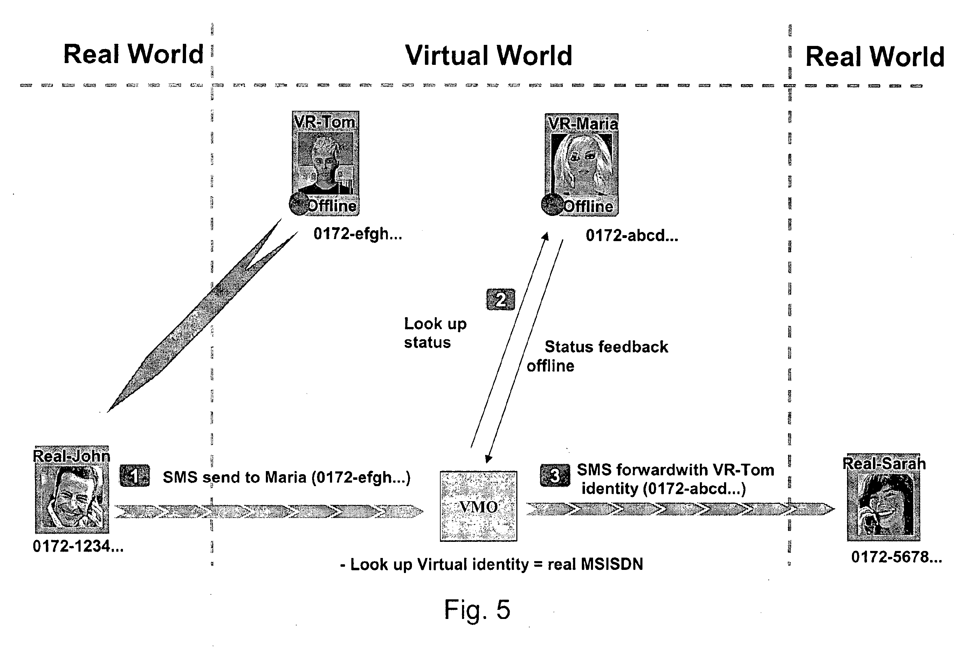

Bei dem in Fig. 5 dargestellten Ausführungsbeispiel einer erfindungsgemäßen Kommunikation ist der reale Teilnehmer "John" mit seiner virtuellen Identität "Tom" nicht seitens des Chatraums (Virtual World) erreichbar (also offline) und initiiert unter Nutzung seiner realen MSISDN "0172-1234..." den Aufbau einer Kommunikationsverbindung zum Austausch von Daten, vorliegend einer Nachricht mittels einer SMS, mit der virtuellen Identität "Maria" des realen Teilnehmers "Sarah". Die Initiierung der Kommunikationsverbindung ist in Fig. 5 mit 1 ("SMS send to Maria (0172-efgh...)") gekennzeichnet.

Für die Adressierung der Kommunikationsverbindung mit dem virtuellen Teilnehmer "Maria" nutzt der virtuelle Teilnehmer "Tom" vorliegend die erste virtuelle Identität des Teilnehmers "Maria". Alternativ und/oder ergänzend kann der virtuelle Teilnehmer "Tom" für die Adressierung der Kommunikationsverbindung vorteilhafterweise eine ihm bekannte zweite virtuelle Identität (virtuelle MSISDN) von dem virtuellen Teilnehmer "Maria", welche ihm vorher von diesem mitgeteilt oder sonst wie bekannt geworden ist, nutzen.

Die Vermittlungseinrichtung (VMO) bestimmt vorliegend anhand der von dem virtuellen Teilnehmer "Tom" für die Adressierung der Kommunikationsverbindung mit dem virtuellen Teilnehmer "Maria" genutzten ersten virtuellen Identität ("Maria") des virtuellen Teilnehmers "Maria" aus der im Rahmen der Registrierung (vergleiche Fig. 1) seitens der Vermittlungseinrichtung (VMO) erfassten Verknüpfung die reale MSISDN ("0172-5678...") des Teilnehmers (virtuell "Maria", real "Sarah").

Anschließend ermittelt die Vermittlungseinrichtung (VMO) den Erreichbarkeitsstatus des anderen Teilnehmers (real "Sarah", virtuell "Maria") seitens des Chatraums (Virtual World). Die Ermittlung des Erreichbarkeitsstatus ist in Fig. 5 mit 2 ("Look up status" und "Status feedback") gekennzeichnet.

Ist, wie in Fig. 5 dargestellt, der reale Teilnehmer "Sarah" mit seiner virtuellen Identität "Maria" nicht seitens des Chatraums (Virtual World) erreichbar, also offline, so initiiert die Vermittlungseinrichtung (VMO) die Versendung der SMS des realen Teilnehmers "John" an die reale MSISDN "0172-5678..." des realen Teilnehmers "Sarah", in Fig. 5 mit 3 ("SMS forward with VR-Tom identity (0172-efgh...)") gekennzeichnet. Dem realen Teilnehmer "Sarah" wird dabei von oder über die Vermittlungseinrichtung (VMO) die bereitgestellte zweite Identität beziehungsweise Adressierungsinformation (virtuelle MSISDN, "0172-efgh...") der virtuellen Identität des Teilnehmers (virtuell "Tom", real "John"), die diesem im Rahmen der Registrierung nach Fig. 1 bereitgestellt und zugeordnet wurde, und mitunter - beispielsweise bei Bedarf - die virtuelle Identität "Tom" signalisiert.

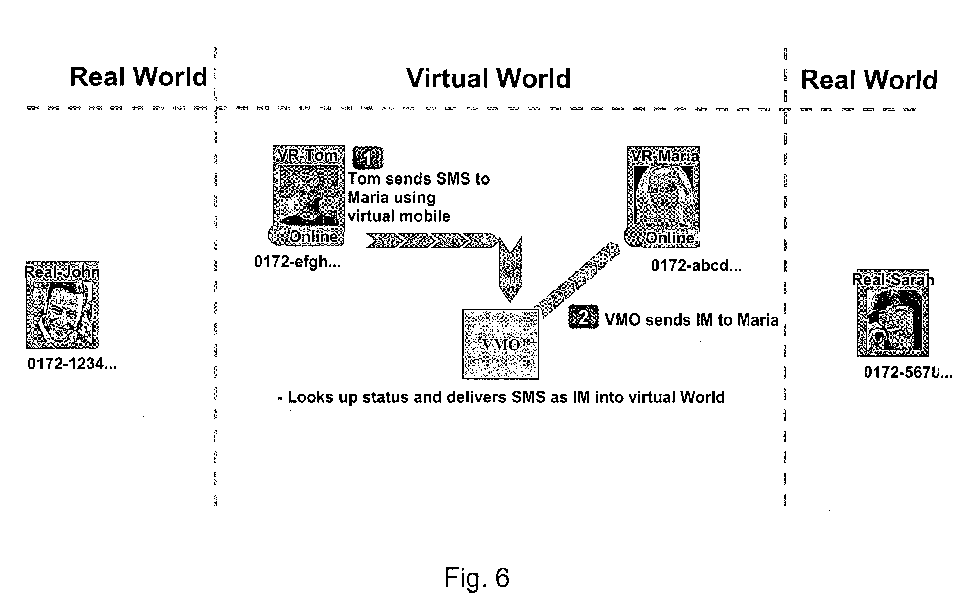

Bei dem in Fig. 6 dargestellten Ausführungsbeispiel einer erfindungsgemäßen Kommunikation ist der reale Teilnehmer "John" mit seiner virtuellen Identität "Tom" seitens des Chatraums (Virtual World) online und initiiert unter Nutzung seiner virtuellen MSISDN, vorzugsweise mit einem virtuellen Endgerät (virtual Mobile), den Aufbau einer Kommunikationsverbindung zum Austausch von Daten, vorliegend einer Nachricht mittels einer SMS, mit der virtuellen Identität "Maria" des realen Teilnehmers "Sarah". Dabei nutzt der virtuelle Teilnehmer "Tom" für die Adressierung der Kommunikationsverbindung die ihm bekannte virtuelle Identität ("Maria") des Teilnehmers (real "Sarah", virtuell "Maria"). Die Initiierung der Kommunikationsverbindung ist in Fig. 6 mit 1 ("Tom sends SMS to Maria using virtual mobile") gekennzeichnet.

Die Vermittlungseinrichtung (VMO) ermittelt anschließend den Erreichbarkeitsstatus des anderen Teilnehmers (real "Sarah", virtuell "Maria") seitens des Chatraums (Virtual World). Ist, wie in Fig. 6 dargestellt, der reale Teilnehmer "Sarah" ist mit seiner virtuellen Identität "Maria" seitens des Chatraums (Virtual World) erreichbar, das heißt online, sendet die Vermittlungseinrichtung die SMS des realen Teilnehmers "John" als Nachricht, vorliegend als sogenannte Instant-Messaging (IM) Nachricht an die virtuelle Identität "Maria", in Fig. 6 mit 2 ("VMO sends IM to Maria") gekennzeichnet. Dem virtuellen Teilnehmer "Maria" wird dabei von oder über die Vermittlungseinrichtung (VMO) die virtuelle Identität "Tom" des Teilnehmers (virtuell "Tom", real "John") signalisiert.

Die in den Figuren der Zeichnung dargestellten und in Zusammenhang mit diesen beschriebenen Ausführungsbeispiele der Erfindung dienen lediglich der Erläuterung der Erfindung und sind für diese nicht beschränkend.

## Patentansprüche

1. Verfahren zum Aufbau einer Kommunikationsverbindung zum Austausch von Sprache und/oder Daten zwischen Teilnehmern,
wobei
wenigstens einer der Teilnehmer wenigstens eine reale Identität in einem Telekommunikationsnetz und
wenigstens eine erste virtuelle Identität seitens einer Kommunikationsplattform
aufweist,
**dadurch gekennzeichnet,**
**dass** die reale Identität und die erste virtuelle Identität des wenigstens einen Teilnehmers seitens einer Vermittlungseinrichtung verknüpft werden,
**dass** unter Nutzung der Verknüpfung mindestens eine zweite virtuelle Identität bereitgestellt wird,
**dass** unter Nutzung der ersten virtuellen Identität und/oder der zweiten virtuellen Identität des wenigstens einen Teilnehmers eine Kommunikationsverbindung seitens wenigstens eines anderen Teilnehmers aufgebaut werden kann,
wobei die Kommunikationsverbindung zumindest teilweise außerhalb der Kommunikationsplattform aufgebaut wird.

2. Verfahren nach Anspruch 1, **dadurch gekennzeichnet, dass** die Kommunikationsverbindung zumindest teilweise über das Telekommunikationsnetz aufgebaut wird.

3. Verfahren nach Anspruch 1 oder Anspruch 2, **dadurch gekennzeichnet, dass** die zweite virtuelle Identität zumindest zwischen jeweils einem Paar von Teilnehmern nicht-temporär ist.

4. Verfahren nach einem der Ansprüche 1 bis 3, **dadurch gekennzeichnet, dass** die zweite virtuelle Identität zwischen allen Teilnehmern nicht-temporär ist.

5. Verfahren nach einem der Ansprüche 1 bis 4, zum Aufbau einer Kommunikationsverbindung zum Austausch von Sprache und/oder Daten zwischen Teilnehmern in Kommunikationsnetzen,
wobei
wenigstens einer der Teilnehmer
wenigstens eine reale Identität in einem Telekommunikationsnetz und
wenigstens eine erste virtuelle Identität seitens einer Kommunikationsplattform in einem Rechnernetz
aufweist,
**dadurch gekennzeichnet,**
**dass**
die reale Identität und die erste virtuelle Identität wenigstens eines Teilnehmers seitens einer Vermittlungseinrichtung verknüpft werden,
unter Nutzung der Verknüpfung mindestens eine zweite virtuelle Identität bereitgestellt wird,
welche als Information zur Adressierung einer Kommunikationsverbindung mit dem Teilnehmer (Adressierungsinformation) nutzbar ist,
wobei
eine Kommunikationsverbindung
zwischen
einem die Kommunikationsverbindung initiierenden Teilnehmer
und
wenigstens einem die Kommunikationsverbindung rezipierenden Teilnehmer
zumindest unter Nutzung
der ersten virtuellen Identität des rezipierenden Teilnehmers
und/oder
der zweiten virtuellen Identität (Adressierungsinformation)
ermöglicht wird,
wobei
der initiierende Teilnehmer
und/oder
der rezipierende Teilnehmer
für die Initiierung und/oder die Rezipierung der Kommunikationsverbindung seine reale Identität in dem Telekommunikationsnetz nutzt.

6. Verfahren einem der Ansprüche 1 bis 5, **dadurch gekennzeichnet, dass** den Teilnehmern bei der Kommunikationsverbindung die reale Identität des jeweils wenigstens einen anderen Teilnehmers unbekannt bleibt.

7. Verfahren nach der Ansprüche 1 bis 6, **dadurch gekennzeichnet, dass** wenigstens eine zweite virtuelle Identität (Adressierungsinformation) durch eine Verknüpfung der ersten virtuellen Identitäten von wenigstens zwei Teilnehmern, durch eine Verknüpfung der zweiten virtuellen Identitäten (Adressierungsinformationen) von wenigstens zwei Teilnehmern und/oder durch eine Verknüpfung einer ersten virtuellen Identität wenigstens eines Teilnehmers mit einer zweiten virtuellen Identität (Adressierungsinformation) wenigstens eines anderen Teilnehmers seitens der Vermittlungseinrichtung bereitgestellt wird.

8. Verfahren nach Anspruch 7, **dadurch gekennzeichnet, dass** die wenigstens eine durch die Verknüpfung bereitgestellte zweite virtuelle Identität (Adressierungsinformation) eine zumindest paarweise Gültigkeit unter den Teilnehmern hat.

9. Verfahren nach einem der Ansprüche 1 bis 8, **dadurch gekennzeichnet, dass** die Verknüpfung eine nicht temporäre Verknüpfung ist.

10. Verfahren nach einem der Ansprüche 1 bis 9, **dadurch gekennzeichnet, dass** die Verknüpfung derart erfolgt, dass die Anzahl der von der Vermittlungseinrichtung zu verwaltenden zweiten virtuellen Identitäten (Adressierungsinformationen) reduziert ist.

11. Verfahren nach einem der Ansprüche 1 bis 10, **dadurch gekennzeichnet, dass** die Vermittlungseinrichtung den Aufbau der Kommunikationsverbindung zwischen der realen Identität wenigstens eines der Teilnehmer in dem Tetekommunikationsnetz und dem wenigstens einen anderen Teilnehmer initiiert.

12. Verfahren nach einem der Ansprüche 1 bis 11, **dadurch gekennzeichnet, dass** bei der Kommunikationsverbindung den Teilnehmern jeweils die erste virtuelle Identität des wenigstens einen anderen Teilnehmers und/oder die jeweilige zweile virtuelle Identität (Adressierungsinformation) des wenigstens einen anderen Teilnehmers signalisiert wird.

13. Verfahren nach einem der Ansprüche 1 bis 12, **dadurch gekennzeichnet, dass** den für die Kommunikationsverbindung ihre reale Identität nutzenden Teilnehmern die Nutzung ihrer jeweiligen eigenen ersten virtuellen Identität und/oder die Nutzung ihrer jeweiligen zweiten virtuelle Identität (Adressierungsinformation) für und/oder mit dem wenigstens einen anderen Teilnehmer signalisiert wird.

14. Verfahren nach einem der Ansprüche 1 bis 13, **dadurch gekennzeichnet, dass** die reale Identität eines Teilnehmers wenigstens eine dem Teilnehmer seitens des Telekommunikationsnetzes zugeordnete Rufnummer (reale MSISDN) des Telekommunikationsnetzes umfasst, welche für die Kommunikationsverbindung als reale Identität des Teilnehmers genutzt wird.

15. Verfahren nach einem der Ansprüche 1 bis 14, **dadurch gekennzeichnet, dass** die erste virtuelle Identität eines Teilnehmers wenigstens eine Adressierungsinformation umfasst, welche für die Kommunikationsverbindung als erste virtuelle Identität des Teilnehmers genutzt wird.

16. Verfahren nach einem der Ansprüche 1 bis 15, **dadurch gekennzeichnet, dass** die zweite virtuelle Identität (Adressierungsinformation) eine von dem Telekommunikationsnetz verwaltete Rufnummer (virtuelle MSISDN) des Telekommunikationsnetzes ist.

17. Verfahren nach Anspruch 16, **dadurch gekennzeichnet, dass** die von dem Telekommunikationsnetz verwaltete Rufnummer (virtuelle MSISDN) des Telekommunikationsnetzes seitens der Vermittlungseinrichtung mit der dem Teilnehmer seitens des Telekommunikationsnetzes zugeordneten Rufnummer (reale MSISDN) des Telekommunikationsnetzes verknüpft wird.

18. Verfahren nach einem der Ansprüche 1 bis 17, **dadurch gekennzeichnet, dass** ein Teilnehmer die für ihn für eine Kommunikationsverbindung mit wenigstens einem anderen Teilnehmer eingerichtete Verknüpfung aktivieren oder deaktivieren kann.

19. Verfahren nach Anspruch 18, **gekennzeichnet durch** eine temporäre oder dauerhafte Aktivierung und/oder eine temporäre oder dauerhafte Deaktivierung.

20. Verfahren nach einem der Ansprüche 1 bis 19, **dadurch gekennzeichnet, dass** die Verknüpfung in der Vermittlungseinrichtung von dem jeweiligen Teilnehmer unter Nutzung seiner ersten virtuellen Identität über eine seitens der Kommunikationsplattform von der Vermittlungseinrichtung angebotene Schnittstelle, welche vorzugsweise eine graphische Benutzeroberfläche (GUI) aufweist, editierbar ist.

21. Verfahren nach einem der Ansprüche 1 bis 20, **dadurch gekennzeichnet, dass** die Kommunikationsverbindung einen Datenaustausch zwischen den Teilnehmern über einen Nachrichtendienst des Telekommunikationsnetzes ermöglicht.

22. Verfahren nach Anspruch 21, **gekennzeichnet durch** einen Kurzmitteilungsdienst (SMS) oder einen Multimediamitteilungsdienst (MMS) als Nachrichtendienst des Telekommunikationsnetzes.

23. Verfahren nach einem der Ansprüche 1 bis 22, **dadurch gekennzeichnet, dass** das Telekommunikationsnetz ein Mobilfunknetz ist, vorzugsweise ein Mobilfunknetz gemäß einem GSM-, GPRS- und/oder UMTS-Funknetzstandard.

24. Verfahren nach einem der Ansprüche 1 bis 23, **dadurch gekennzeichnet, dass** die Kommunikationsplattform in einem Rechnernetz ein Chatraum im Internet ist, vorzugsweise ein Chatraum in einer Internet-3D-Infrastruktur wie "Second Life" der Linden Lab oder dergleichen Computer-Rollenspiel-Anwendung.

25. Netzknoten in einem Kommunikationsnetz, welcher an dem Aufbau einer Kommunikationsverbindung zum Austausch von Sprache und/oder Daten zwischen Teilnehmern zumindest teilweise beteiligt ist, **dadurch gekennzeichnet, dass** dieser ausgebildet und/oder eingerichtet ist ein Verfahren nach einem der Ansprüche 1 bis 24 zumindest teilweise auszuführen.

26. Netzknoten nach Anspruch 25, **dadurch gekennzeichnet, dass** dieser die Vermittlungseinrichtung bildet und/oder zumindest mit der Vermittlungseinrichtung verbindbar ist.

27. Netzknoten nach Anspruch 25 oder Anspruch 26, **dadurch gekennzeichnet, dass** dieser eine Umsetzeinrichtung (Gateway) zwischen dem Telekommunikationsnetz und dem Rechnernetz ist, vorzugsweise eine Umsetzeinrichtung (Gateway) zwischen einem Mobilfunknetz und dem Internet oder einem Intranet.

28. Endgerät zur Nutzung in Kommunikationsnetzen zum Austausch von Sprache und/oder Daten zwischen Teilnehmern im Rahmen einer Kommunikationsverbindung, **dadurch gekennzeichnet, dass** dieses ausgebildet und/oder eingerichtet ist ein Verfahren nach einem der Ansprüche 1 bis 24 zumindest teilweise auszuführen.

29. Endgerät nach Anspruch 28, **dadurch gekennzeichnet**, das dieses ausgebildet und/oder eingerichtet ist bei der Kommunikationsverbindung den Teilnehmern jeweils die erste virtuelle Identität des wenigstens einen anderen Teilnehmers und/oder die jeweilige zweite virtuelle Identität (Adressierungsinformation) des wenigstens einen anderen Teilnehmers zu signalisieren.

30. Endgerät nach Anspruch 28 oder Anspruch 29, **dadurch gekennzeichnet**, das dieses ausgebildet und/oder eingerichtet ist bei der Kommunikationsverbindung den für die Kommunikationsverbindung ihre reale Identität nutzenden Teilnehmem die Nutzung ihrer jeweiligen eigenen ersten virtuellen Identität und/oder die Nutzung ihrer jeweiligen zweiten Identität (Adressierungsinformation) für und/oder mit dem wenigstens einen anderen Teilnehmer zu signalisieren.

31. Endgerät nach einem der Ansprüche 28 bis 30, **dadurch gekennzeichnet, dass** dieses ein in einem Mobilfunknetz gemäß einem GSM-, GPRS- und/oder UMTS-Funknetzstandard betreibbares Mobilfunktelefon ist.
